Europäisches Patentamt

European Patent Office

Office européen des brevets

(19)

(11) **EP 0 898 726 B1**

(12) **FASCICULE DE BREVET EUROPEEN**

(45) Date de publication et mention
de la délivrance du brevet:
**08.03.2000 Bulletin 2000/10**

(51) Int Cl.⁷: $G02B\ 27/58$, $G02B\ 27/10$, $B23K\ 26/06$

(21) Numéro de dépôt: **97924081.9**

(22) Date de dépôt: **13.05.1997**

(86) Numéro de dépôt international:
**PCT/FR97/00843**

(87) Numéro de publication internationale:
**WO 97/43682 (20.11.1997 Gazette 1997/50)**

(54) **OPTIQUE DIFFRACTIVE A SYNTHESE D'OUVERTURE ET DISPOSITIF DE DECOUPE LASER INCORPORANT UNE TELLE OPTIQUE**

DIFFRAKTIVE OPTIK MIT SYNTHETISCHER APERTUR UND LASERSCHNEIDVORRICHTUNG MIT EINER SOLCHEN OPTIK

APERTURE-SYNTHESIS DIFFRACTIVE OPTICAL DEVICE AND LASER CUTTING DEVICE COMPRISING SAME

(84) Etats contractants désignés:
**DE GB**

(30) Priorité: **15.05.1996 FR 9606088**

(43) Date de publication de la demande:
**03.03.1999 Bulletin 1999/09**

(73) Titulaire: **COMMISSARIAT A L'ENERGIE ATOMIQUE**
**75015 Paris (FR)**

(72) Inventeurs:
• **GRANDJEAN, Jean-Paul**
**F-30200 Sabran (FR)**
• **MEYRUEIS, Patrick**
**F-67000 Strasbourg (FR)**
• **KRESS, Bernard**
**F-67000 Strasbourg (FR)**
• **TWARDOWSKI, Patrice**
**F-67000 Strasbourg (FR)**

(74) Mandataire: **Des Termes, Monique et al**
**Société Brevatome**
**3, rue du Docteur Lanceraux**
**75008 Paris (FR)**

(56) Documents cités:
**WO-A-96/00912**      **US-A- 4 192 578**
**US-A- 4 826 269**

• **GERCHBERG R W ET AL: "A PRACTICAL ALGORITHM FOR THE DETERMINATION OF PHASE FROM IMAGE AND DIFFRACTION PLANE PICTURES" OPTIK, vol. 35, no. 2, 1972, pages 237-246, XP000615059 cité dans la demande**

**Description**

Domaine technique et art antérieur

L'invention concerne le domaine de la découpe laser, en particulier en vue d'applications au démantèlement et/ou au démontage.

L'intérêt de mettre en oeuvre des techniques laser pour réaliser des opérations de démantèlement est de pouvoir bénéficier d'une certaine flexibilité du procédé (possibilité de découpe à distance et de variation de la distance de découpe), ainsi que des gains potentiels importants au niveau des déchets secondaires de découpe (moins d'aérosols, moins de copeaux, des saignées de découpe plus fines).

Cependant, peu de systèmes ont été mis en oeuvre pour trois raisons essentielles :

- les sources lasers les plus puissantes, notamment à $CO_2$, nécessitent un transport de faisceau par miroirs, car la longueur d'onde des sources à $CO_2$ est incompatible avec les matériaux constituant les fibres optiques de puissance. Ces miroirs permettent de réaliser les mouvements nécessaires à la découpe. Le mécanisme qui en résulte est d'une grande complexité, en particulier lorsqu'il s'agit de traverser des confinements et des protections biologiques d'installations nucléaires.
- les sources dont le faisceau est transportable par fibres optiques (Nd:YAG par exemple) ont des puissances supérieures au kW depuis quelques années seulement. Par ailleurs, l'utilisation de la technique de transmission par fibre optique pose des problèmes, qui seront exposés ci-après,
- les procédés traditionnels de découpe par laser nécessitent l'utilisation de gaz d'assistance pour rendre la découpe faisable (chasse de la matière fondue, protection des optiques), ce qui exige par conséquent de suivre la pièce à découper à proximité (à environ 1 à 2 mm).

Ces contraintes ont rendu donc très difficile l'utilisation des lasers en découpe de démantèlement, où le confinement est obligatoire, où il faut traverser souvent des protections biologiques, et où le suivi de proximité est pratiquement impossible car la géométrie des objets à découper est à la fois complexe, mal connue (car souvent difficile à mesurer, notamment en ambiance nucléaire), et très variable.

La mise en oeuvre de fibres optiques a, quant à elle, posé un certain nombre de problèmes.

En particulier, à la sortie de la fibre, le faisceau émergeant est perturbé, du fait de son trajet ; par exemple, un faisceau de répartition gaussienne autour de son axe prend une forme annulaire en sortie d'une fibre classique à saut d'indice. Par conséquent, le maximum de la répartition d'énergie se trouve excentré, et les performances de découpe sont amoindries.

Il est possible de parvenir à corriger les perturbations du faisceau, pour des focales de l'ordre du mètre, avec des lentilles classiques en verre, de type BK7 par exemple. Ces lentilles sont transparentes à l'infrarouge (de longueur d'onde 1,06 µm) émis par un laser Nd:YAG. Mais la masse atteinte avec cette technologie, et pour cette focale, se situe aux alentours de 15 à 20 kilos. De plus, un tel ensemble est aussi fragile qu'un télescope de même ouverture (20 cm) et ne doit pas, par exemple, être l'objet de chocs qui modifieraient les réglages et mettraient en cause la sécurité d'exploitation.

En conséquence, l'asservissement de la focale à distance (zoom), nécessaire pour la découpe de pièces de géométrie complexes, est pratiquement impossible en utilisant des miroirs ou des lentilles classiques en verre, sans des paramètres d'encombrement, de fragilité et de masse excessifs. Il est donc peu envisageable d'accéder à des distances focales supérieures au mètre, pour la découpe laser de démantèlement, par des systèmes optiques classiques qui sont plus adaptés à des utilisations en laboratoire, et/ou à des focales faibles (inférieures au mètre) qu'à la découpe sur des chantiers nucléaires, à grande distance.

L'utilisation de miroirs pour construire une optique de focalisation augmenterait encore l'encombrement, pour un poids et une fragilité équivalente, compte tenu notamment des dispositifs de rigidification et de monture des miroirs.

Le document WO-A-9600912 décrit un dispositif optique, fonctionnant en transmission,de focalisation d'un faisceau lumineux comprenant un premier élément optique diffractif synthétique, séparant le faisceau incident en faisceaux lumineux de longueur d'ondes différentes et un second élément diffractif synthétique (43) permettant de refocaliser les différents faisceaux sur cet axe.

Exposé de l'invention

L'invention a tout d'abord pour objet un dispositif optique de focalisation présentant un encombrement et un poids limités, peu fragile, et compatible avec l'utilisation d'un laser de puissance, en particulier pour une utilisation dans un dispositif de découpe par laser. Le dispositif optique de focalisation doit permettre une correction des défauts occasionnés pour une fibre optique de transmission d'un faisceau laser.

Plus précisément, l'invention a tout d'abord pour objet un dispositif optique de focalisation d'un faisceau lumineux, comportant :

- un élément diffractif de Fourier, qui permet de séparer un faisceau incident en n faisceaux suivant n directions symétriques par rapport à un axe optique du dispositif,
- un élément diffractif comportant n lentilles de Fresnel, permettant de refocaliser les n faisceaux sur l'axe optique.

Les avantages liés à ce dispositif sont, entre autres, les suivants.

L'optique diffractive assure la correction des aberrations d'un faisceau, qui résultent du transport de ce dernier par une fibre optique. Cette correction peut être effectuée par la lentille de Fourier ou par les lentilles de Fresnel, ou de façon partielle sur les deux types de lentille.

Ce dispositif permet de synthétiser une ouverture importante, avec des composants de taille réduite. C'est un montage de type Fourier-Fresnel, à synthèse d'ouverture, qui permet, par séparation du faisceau incident en n faisceaux identiques (par la lentille de Fourier), et focalisation de ces n portions de faisceau (par n lentilles de Fresnel), de remplacer une optique de grande ouverture, donc de grande taille, par un ensemble de taille plus réduite.

Du point de vue de la réalisation, le problème de fabrication d'un composant diffractif de Fresnel de taille importante (100 mm de diamètre minimal) est ramené à l'usinage de n composants de taille inférieure.

Par ailleurs, l'utilisation d'un tel dispositif est aisée. La variation de focale se fait simplement en déplaçant un des composants parallèlement à l'autre. Leur positionnement respectif, du fait de la formule Fresnel-Fourier choisie, n'est pas critique et peut donc être maîtrisé avec des moyens mécaniquement simples.

Un tel dispositif est adapté à une utilisation avec un laser de puissance. De plus, il constitue un composant optique peu sensible aux perturbations environnementales (vibrations, chocs, poussières, etc...) et est donc adapté à une exploitation de chantier, telle qu'une installation de démantèlement par laser. Enfin, ce dispositif peut être facilement remplacé, par exemple sous forme de modules : aucun positionnement ou réalignement optique critique n'est à mettre en oeuvre lors du remplacement.

Les deux éléments (élément de Fourier et l'ensemble des élements de Fresnel) peuvent être disposés de manière à ce que le dispositif fonctionne en transmission, ou en réflexion. Dans ce dernier cas, les deux éléments sont disposés de manière à ce qu'un faisceau incident soit réfléchi par l'élément de Fourier et décomposé en n faisceaux, chacun de ces faisceaux étant ensuite réfléchi par une des lentilles de Fresnel vers un point de focalisation.

Des moyens de collimation du faisceau incident peuvent également être prévus, par exemple du type élément réfractif.

L'invention a également pour objet un dispositif pour engendrer un rayonnement laser focalisé, comportant des moyens pour engendrer un faisceau laser et un dispositif de focalisation tel que décrit ci-dessus.

On dispose ainsi d'un ensemble fonctionnant de manière assez simple, avec tous les avantages décrits ci-dessus en liaison avec le dispositif de focalisation.

En particulier, si, à la sortie du laser, le faisceau est transmis par fibre optique, le dispositif de focalisation permet de corriger les aberrations liées au transport par fibre optique.

Enfin, l'invention a également pour objet un dispositif pour la découpe laser, comportant un dispositif pour engendrer un rayonnement laser focalisé, tel que ci-dessus.

L'optique de focalisation mise en oeuvre permet de réaliser un dispositif utilisable sur un site de découpe. Des distances focales de l'ordre du mètre (ou plus) peuvent être aisément atteintes, ce qui n'est pas envisageable avec des systèmes optiques classiques (composants réfractifs). La fonction "zoom" peut être réalisée de manière très simple, et ne nécessite pas la mise en oeuvre de miroirs et/ou des lentilles en verre, encombrants et fragiles : il suffit en effet de réaliser un déplacement d'un des composants optiques parallèlement à l'autre pour obtenir un effet de variation de focale.

En outre, ce procédé ne met pas en oeuvre de projection de gaz d'appoint, au niveau de la zone d'impact du faisceau laser.

Des moyens peuvent être prévus pour déclencher, de manière impulsionnelle et relaxée, les moyens d'émission du laser.

Le fait d'utiliser un laser fonctionnant en mode impulsionnel permet de créer un plasma très énergétique au voisinage de la zone d'impact sur la pièce à découper. En fait, le mode impulsionnel a pour conséquence d'ajouter à l'échauffement du matériau un effet de chasse qui permet de remplacer le gaz d'assistance utilisé dans les applications industrielles classiques. Cet effet de chasse s'explique par la qualité du plasma, très énergétique, créé par les impulsions laser.

Ce plasma a un autre effet positif sur la découpe : il permet une autofocalisation du faisceau dans l'épaisseur du matériau découpé. Ceci explique que, malgré l'absence de gaz d'assistance, on obtienne des découpes de très bonne qualité (les saignées sont très fines, à bords parallèles, et d'une taille sensiblement identique au diamètre de la tache focale, et à bords parallèles) et profondes (il devient possible de découper des matériaux épais). Le fait d'obtenir des saignées fines permet en outre de réduire les déchets secondaires produits, tels que les gaz ou des sédiments du type bille métallique, et donc aussi d'éviter de salir de manière trop rapide les moyens de focalisation présents en sortie de fibre optique.

Enfin, le fonctionnement en mode impulsionnel permet, toujours du fait de la création d'un plasma, une plus grande tolérance sur les autres paramètres de découpe : par exemple, la précision de la focalisation est assez peu critique, en tout cas moins que dans les techniques mettant en oeuvre un faisceau continu. Le plasma permet de disposer d'une densité d'énergie plus importante qu'en mode continu. Il y a en outre moins besoin d'asservir la focalisation, du fait de cette tolérance et il est possible de découper en épaisseur du fait de de l'autofocalisation du faisceau.

L'utilisation d'un seul mode laser (mode relaxé) permet quant à elle d'obtenir une stabilité modale, gage de l'uniformité du couplage pour la découpe.

Le pilotage d'un laser en mode impulsionnel est aisé : la hauteur, la largeur et l'espacement des impulsions sont réglables. Il est donc possible d'optimiser les opérations de découpe en fonction du contexte, étant donné l'effet de ces paramètres d'impulsion sur la physique spatio-temporelle du plasma créé au voisinage de la zone d'impact. Par exemple, si le découpage est effectué sur des petites épaisseurs, il n'est pas nécessaire d'envoyer des impulsions très énergétiques.

L'extrémité de la fibre optique peut faire partie d'une tête de découpe.

Il est également possible de prévoir des moyens de contrôle de la position de l'extrémité de la tête de découpe et/ou des moyens de contrôle de la focalisation du faisceau.

Par ailleurs, des moyens peuvent être prévus pour déplacer l'extrémité de la tête de découpe. Ainsi, dans le cas d'une pièce à découper qu'il n'est pas possible de déplacer, c'est la tête de découpe elle-même, que l'on déplace. Ces moyens de déplacement peuvent par exemple comporter un ou plusieurs bras robotisé(s).

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- les figures 1A et 1B représentent un dispositif àe focalisation selon l'invention, dans un mode de réalisation en transmission, respectivement en vue de côté et de face,
- la figure 2 représente un dispositif de focalisation selon l'invention, dans un mode de réalisation en réflexion,
- la figure 3 représente schématiquement les différents ordres diffractés par les deux éléments d'un dispositif selon l'invention, en réflexion,
- la figure 4 est un schéma d'étapes de calcul d'un élément de Fourier,
- les figures 5A-5C représentent des étapes de réalisation d'un masque de chrome,
- les figures 6A-6D représentent des étapes de transfert photolithographique et d'usinage d'un substrat,
- les figures 7A-7D représentent des étapes de réalisation d'éléments à $2^n$ niveaux de phase,
- les figures 8 et 9 sont des clichés reproduisant respectivement un élément de Fresnel et une portion d'un élément de Fourier mis en oeuvre dans un dispositif selon l'invention,
- la figure 10 est un schéma d'un dispositif de découpe selon l'invention.

Description détaillée de modes de réalisation de l'invention

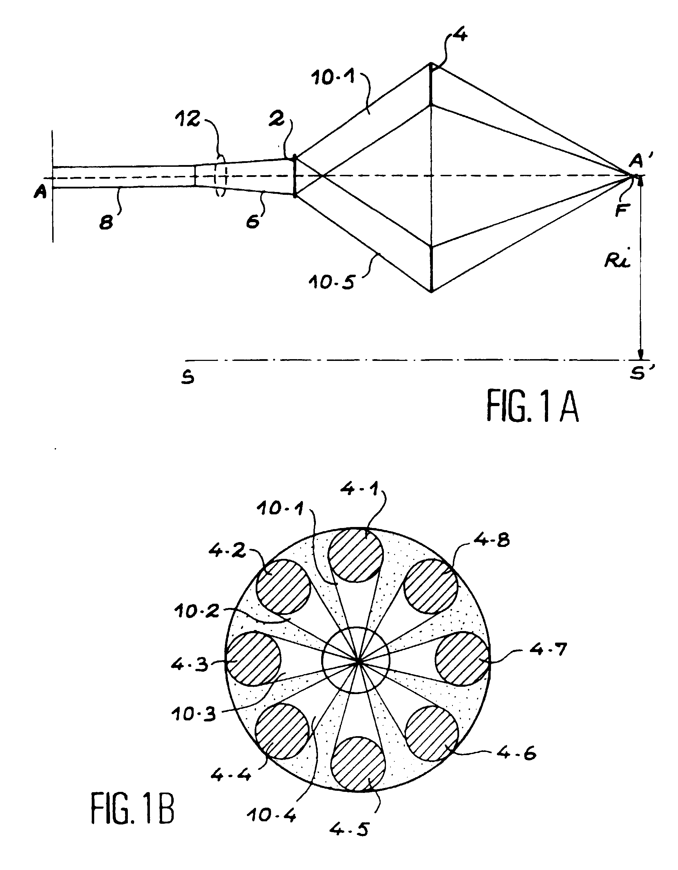

Un premier mode de réalisation d'un dispositif optique de focalisation selon l'invention va être décrit, en liaison avec la figure 1. Le système comporte deux éléments diffractifs 2, 4.

Le premier élément est un élément diffractif de Fourier (lentille de Fourier), qui permet de séparer un faisceau incident 6 (amené par exemple par l'intermédiaire d'une fibre optique 8) en n faisceaux identiques (n=4, 6, 8 ou 10), dans n directions symétriques par rapport à l'axe optique AA'.

Ces n faisceaux 10-1, ..., 10-8 (n=8 sur les figures IA et 1B) sont ensuite dirigés vers n lentilles de Fresnel 4-1, 4-2, 4-3, 4-4, 4-5, 4-6, 4-7, 4-8 qui, à leur tour, permettent la focalisation des n portions de raisceau en direction d'un point F de l'axe AA'. Globalement, l'ensemble du dispositif fonctionne donc comme une lentille convergente qui refocalise l'énergie sur l'axe optique, à une certaine distance. Cette dernière dépend du montage optique, et en particulier de la distance entre les éléments 2, 4 du dispositif.

Le dispositif de focalisation selon l'invention met donc en oeuvre un composant de Fourier, pour répartir le faisceau sur un composant opérant par synthèse d'ouverture en mode diffractif, avec un codage de la lentille sur une petite pupille reproduite n fois à l'identique. L'ouverture effective du composant obtenu dépasse la dimension physique de ce composant.

Eventuellement, le faisceau d'entrée 6 peut être collimaté à l'aide de moyens 12, de type diffractif, par exemple une lentille de collimation sphérique opérant en transmission.

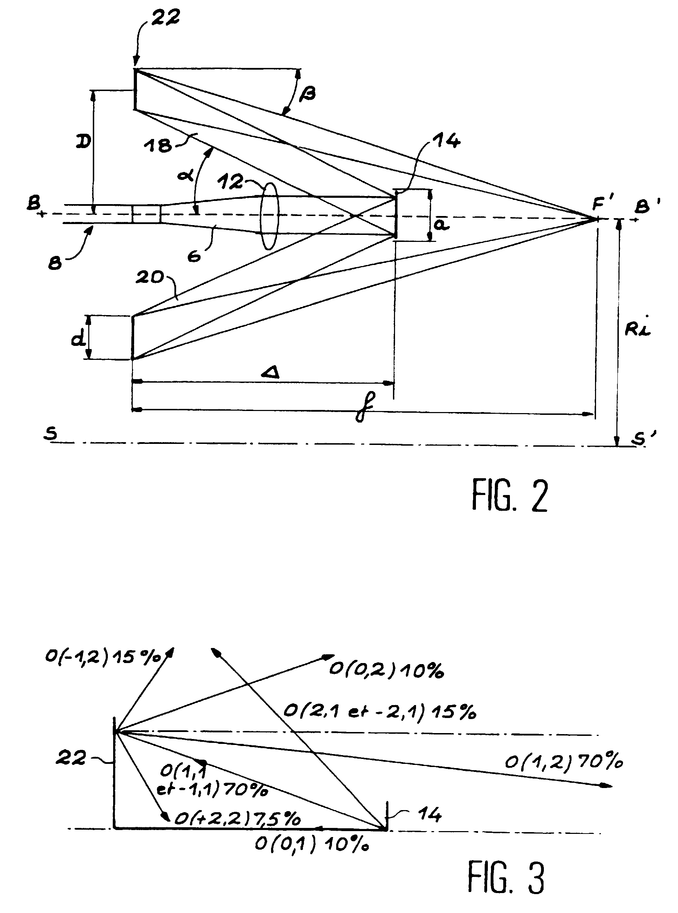

Un autre mode de réalisation de l'invention va être décrit en liaison avec la figure 2. Ce second mode de réalisation fonctionne "en réflexion". Comme dans le cas de la figure 1, un faisceau 6, par exemple en sortie d'une fibre 8, est envoyé en direction d'un élément diffractif de Fourier 14. Ce dernier fonctionnant cette fois en réflexion. Eventuellement, le faisceau 6 peut avoir traversé préalablement les moyens 12 de collimation, par exemple une lentille sphérique opérant en transmission.

L'élément de Fourier 14 répartit la lumière du faisceau incident en n faisceaux identiques, dans n directions symétriques par rapport à l'axe BB'. Ces n faisceaux 18, 20, ... sont réfléchis en direction du second élément 22 de ce dispositif de focalisation. Ce second élément comporte en fait n lentilles de Fresnel. Chacune de ces lentilles va permettre de traiter un des faisceaux 18, 20, ... obtenus après réflexion sur la lentille de Fourier 14, ce traitement ayant lieu en diffraction. Les n faisceaux sont alors focalisés en un même point F' : on obtient en fait n taches de focalisation qui vont interférer entre elles.

Lors des réflexions successives sur les éléments de Fourier et de Fresnel, des ordres différents sont réfléchis dans des directions différentes, et seuls certains ordres sont réfléchis en direction du point F'. L'énergie issue des ordres indésirables peut être récupérée et piégée dans des cônes en matériau léger.

Dans tous les modes de réalisation, le dispositif selon l'invention opère globalement comme une lentille. Mais, pour des performances équivalentes (même ouverture), le dispositif selon l'invention est beaucoup plus compact. L'axe de la lentille ainsi synthétisée n'est pas confondu avec l'axe optique (AA' sur la figure 1A, BB' sur la figure 2). L'axe de la lentille synthétique est repéré par l'axe SS' sur les figures 1A et 2 : il se trouve à une distance $R_i$ de l'axe optique du dispositif.

Selon un exemple de réalisation, le faisceau 6 à focaliser est le faisceau d'un laser YAG (longueur d'onde = 1,06 microns), il traverse une lentille 12 de collimation, et rencontre un élément 14 de Fourier, binaire, carré, de côté a=2 cm, composé de cellules carrées de 3 microns de côté.

Les éléments de Fresnel 22 sont constitués par huit lentilles sphériques identiques, à quatre niveaux de phase. La pupille de chaque lentille est ronde, de diamètre d=20 mm, et le centre de chaque pupille se trouve à une distance D=50 mm de l'axe BB'. Les éléments de Fourier et de Fresnel sont séparés par une distance Δ, le long de l'axe BB' : Δ=475,7 mm. Dans ces conditions, le point F' se trouve séparé du plan contenant les éléments de Fresnel 22 par une distance f=1400 mm. Après réflexion sur l'élément de Fourier 14, le faisceau incident 6 est séparé en huit faisceaux réfléchis dans huit directions symétriques, avec un angle γ=6°. De même, après réflexion sur les éléments de Fresnel 22, la réflexion a lieu en direction du point F', avec un angle β compris entre -1,637° et -2,454°, par rapport à une direction perpendiculaire au plan contenant les éléments de Fresnel 22.

La distance $R_i$ vaut, dans cet exemple, environ 147,1 mm. La lentille classique, réfractive, permettant d'obtenir les mêmes caractéristiques de focalisation et d'ouverture présente un rayon de 197,1 mm.

La lentille de Fresnel codée au travers d s 8 pupilles hors de l'axe, identiques et symétriques, est constituée, sur ces pupilles, de franges circulaires dont les périodes varient de

$$\frac{\lambda f}{2\left(D - \dfrac{d}{2}\right)}$$

pour les franges maximum à

$$\frac{\lambda f}{2\left(D + \dfrac{d}{2}\right)}$$

pour les franges minimum, où D et d ont la signification déjà donnée ci-dessus. Les plus petites structures gravées sous deux niveaux de phase auront donc 3,58 μm de taille latérale, et les plus petites structures gravées sous quatre niveaux de phase auront ainsi 1,97 μm de taille latérale.

Avec ces données, les coefficients de réflexion dans les différents ordres sont indiqués sur la figure 3, où l'expression O(n,m)x% représente l'ordre n issu de l'élément m, avec une efficacité de x%. L'intensité du faisceau entrant est prise égale à 100%.

D'une manière générale, dans un dispositif de focalisation selon l'invention, la tolérance d'alignement longitudinal de l'élément de Fourier, par rapport à l'élément de Fresnel, est grossière. Dans l'exemple donné ci-dessus, cette tolérance est de ±0,5 mm. Ceci est dû au fait que, un élément de Fourier étant mis en oeuvre, il y a invariance par translation. La tolérance d'alignement latéral est en général grossière, car les faisceaux issus de l'élément de Fourier sont deux fois plus petits que les pupilles de l'élément de Fresnel. La fibre optique et la lentille de collimation ont également des tolérances d'alignement grossières (de l'ordre de 1 mm). Par contre, l'élément de Fourier est de préférence maintenu le plus possible parallèle aux éléments de Fresnel. Ce parallélisme des deux éléments peut être obtenu par réglage, par exemple à l'aide de vis micrométriques placées au dos de l'élément de Fourier.

Les éléments de Fourier et de Fresnel peuvent être réalisés en quartz de 1 mm d'épaisseur, gravés. L'élément diffractif ainsi obtenu peut être supporté par un substrat de quartz, par exemple de 5 mm d'épaisseur, Il peut être par ailleurs recouvert d'une couche d'or (de 50 nm environ), cette couche permettant une évacuation de la chaleur absorbée sous l'impact du rayonnement.

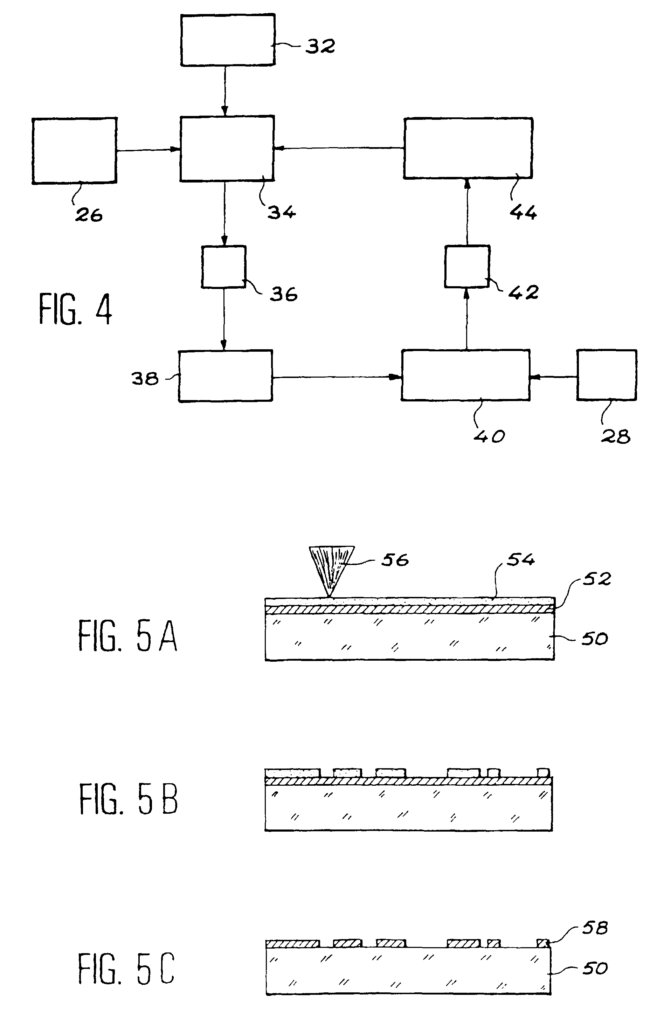

Un procédé de calcul des éléments va maintenant être décrit. Le premier élément de Fourier peut être par exemple optimisé à l'aide d'un algorithme itératif, appelé algorithme de GERCHBERG-SAXTON, décrit par exemple dans l'article de R.W. GERCHBERG et al., intitulé "A practical algorithm for the determination of phase from image and diffraction plane pictures", paru dans Optik, vol. 35, n°2, pp. 237-246, 1972. Cet algorithme permet de calculer rapidement la phase d'une fonction d'onde complète, dont les intensités dans le plan de diffraction et dans le plan image d'un système optique sont connues. Les étapes de cet algorithme vont être brièvement rappelées, en liaison avec la figure 4.

Les contraintes imposées sont les intensités échantillonnées dans le plan image et dans le plan de diffraction. Les amplitudes sont proportionnelles à la racine carrée des intensités mesurées. Ces données peuvent être stockées dans une zone mémoire d'un micro-ordinateur.

Dans une première étape 32, un générateur de nombres aléatoires génère un ensemble de nombres aléatoires, compris entre $\pi$ et $-\pi$, ce qui correspond à une estimation initiale de la phase des amplitudes images échantillonnées. (Sur la figure 4, la référence 26 désigne l'étape d'échantillonnage et de mémorisation de l'intensité et de l'amplitude dans le plan image, la référence 28 désigne l'étape d'échantillonnage et de mémorisation de ces mêmes valeurs dans le plan de diffraction).

Les valeurs aléatoires sont ensuite multipliées par les amplitudes du plan image (étape 34). Ainsi, est engendrée une fonction complexe, discrète, dont est calculée ensuite la transformée de Fourier (étape 36) par un algorithme de transformée de F'ourier rapide (FFT). Il en résulte une fonction complexe, dont les phases sont extraites (étape 38). Ces valeurs de phase sont combinées avec les valeurs d'amplitude dans le plan de diffraction (étape 40), et la fonction obtenue subit (étape 42) une transformation de Fourier rapide, dont la phase est extraite (étape 44). Celle-ci est ensuite combinée avec les amplitudes du plan image (étape 34), pour former une nouvelle estimation de la fonction complexe dans le plan image. Le processus est ensuite répété de manière itérative.

En fait, l'algorithme de Gerchberg-Saxton est un algorithme de calcul de phases. On dispose de deux champs conjugués par une transformée de Fourier (le champ de l'hologramme et le champ lointain, composé de n points symétriques limités par la diffraction).

L'algorithme laisse évoluer la phase dans les deux champs. La phase résultante dans le champ de l'hologramme est alors numérisée en deux seules valeurs : 0 et $\pi$.

Cet algorithme est un algorithme de modélisation et d'optimisation : la modélisation se fait pendant la première boucle de l'algorithme, et l'optimisation pendant les suivantes.

Dans le cas particulier du dispositif optique de focalisation selon l'invention, les contraintes retenues sont les intensités dans le plan de l'élément diffractif, la divergence du faisceau issu de la fibre multimode, la contrainte dans le champ lointain étant la distribution d'énergie selon les n pupilles de Fresnel 22.

Le second élément (pupille de Fresnel), à ouverture synthétique, est donné analytiquement, par un calcul sur C.A.O. optique classique de type code V, disponible commercialement, et est asphérique. Chaque pupille est représentée par exemple par le profil de phase suivant :

$$\phi(x, y) = \text{Circ}_{R_i, R_0}\left\{\frac{2\pi}{\lambda} \sqrt{x^2 + y^2 + f^2} - f\right\}$$

où $R_i$ est la distance entre le centre de la lentille synthétique et le centre d'une pupille ; $R_0$ est le rayon d'une pupille, f la focale et $\lambda$ la longueur d'onde du laser.

La fabrication des deux éléments du dispositif optique selon l'invention peut se faire par microlithographie à faisceaux d'électrons. Des masques binaires de chrome sont préparés par faisceaux d'électrons, transférés et alignés l'un après l'autre par rapport à un substrat final, puis usinés ioniquement. Par exemple, on utilise 4 masques de chrome pour réaliser un élément avec 16 niveaux de phase, d'une taille d'environ 2 cmx2 cm, composé de 2048 cellules carrées, chaque cellule représentant une unité de 10 μm x 10 μm. L'efficacité de diffraction d'un tel élément est de l'ordre de 95%, c'est-à-dire que seulement 5% de la lumière est perdue.

Les figures 5A à 5C représentent des étapes de réalisation d'un masque de chrome. Sur un substrat en quartz 50, on dépose une couche de chrome 52, ainsi qu'une couche de résine 54 pouvant être attaquée par faisceau d'électrons 56. Après gravure de la couche 54 (figure 5B), on procède à un décapage de la couche de chrome 52, puis de la couche de résine 54, par trempage dans un bain acide. On obtient ainsi le masque de chrome 58 désiré (figure 5C).

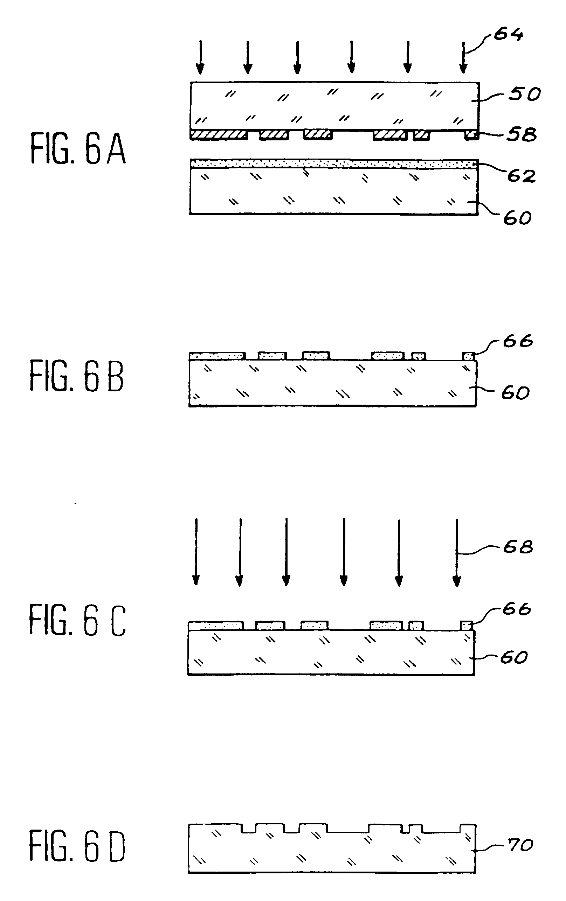

Les figures 6A à 6D représentent les étapes de transfert photolithographique du masque binaire de chrome 58 réalisé antérieurement, puis d'usinage du substrat final, pour obtenir un élément à deux niveaux. Sur un substrat de quartz 60 est déposée une couche de matériau photorésistant 62. Un faisceau 64 de rayonnement ultraviolet est dirigé en direction du substrat 60, en traversant le masque de chrome 58 (figure 6A). On obtient ainsi (figure 6B) une couche photorésistante 66 reproduisant les motifs du masque de chrome 58. Un faisceau 68 d'ions argon collimatés permet de décaper la surface du substrat 60 pour obtenir un élément 70, codé en surface avec deux niveaux de phase (figure 6D).

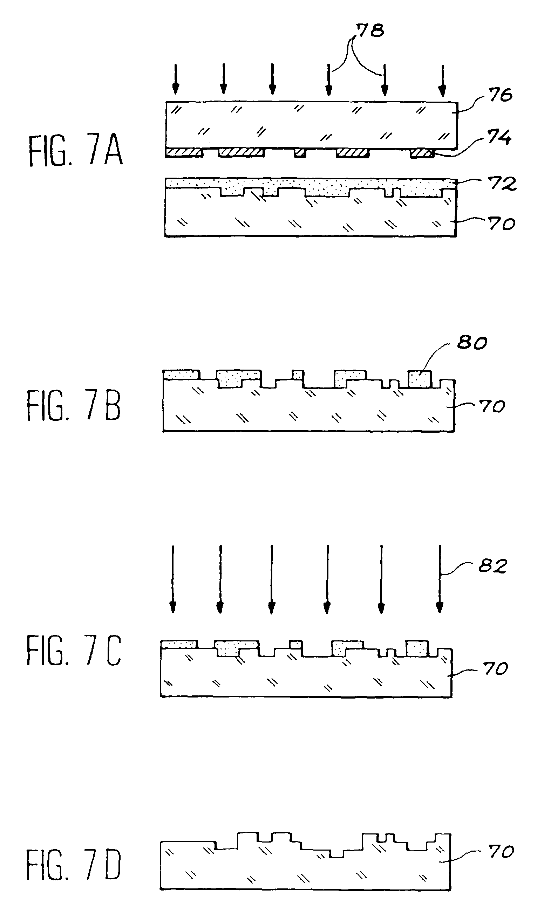

Pour obtenir des niveaux de phase d'ordre supérieur, le substrat 70 est recouvert d'une couche de matériau photorésistant 72 (figure 7A). Un second masque binaire, de chrome 74, est formé sur un substrat 76 selon la technique décrite ci-dessus en liaison avec la figure 5A-5C. Puis, le masque 74 et le substrat 70 sont alignés, et un faisceau de rayonnement ultraviolet collimaté 78 est dirigé en direction du substrat 70, en traversant le masque binaire 74 (figure 7A). On obtient ainsi un substrat 70 dont la surface, déjà codée à deux niveaux, est recouverte d'une couche photorésistive 80 elle-même codée à deux niveaux (figure 7B). Un faisceau d'ions argon collimaté 82 (figure 7C) permet de transférer le codage de la couche photorésistive en surface de l'élément 70, qui est ainsi codé à 4 niveaux de phase (figure 7D).

D'une manière générale, on utilise n masques binaires pour coder un élément à $2^n$ niveaux de phase (n>2).

Les éléments de Fresnel sont réalisés en tenant compte du fait que les N pupilles codent exactement la même information. Pour réaliser un codage à $2^n$ niveaux de phase, on ne prépare donc que N et non pas nN, masques de chrome. Pour la réalisation des masques et pour la gravure des substrats, les mêmes techniques que celles exposées ci-dessus, en liaison avec les figures 5A-7D, sont mises en oeuvre. Le premier masque de chrome est transféré sur un substrat de quartz, et ceci n fois (pour les n pupilles) suivant une symétrie de révolution. Après usinage ionique, les deuxième, troisième, n$^{\text{ième}}$, masques de chrome sont transférés et usinés ioniquement, jusqu'à obtention de $2^n$ niveaux de phase sur les N éléments. Dans le cas de la réalisation de 16 niveaux de phase (n=4), les substrats de quartz utilisés sont de taille 6 pouces x 6 pouces.

Dans tous les cas, l'aligneur de masques utilisé permet d'aligner les différents masques à ±0,5 μm.

Du point de vue pratique, la réalisation des composants selon l'invention met en oeuvre les étapes suivantes de logiciel, qui incorporent à la fois les étapes de l'algorithme de Gerchberg-Saxton et celles de préparation de la microlithographie qui vient d'être exposée :

1) Remplissage d'une matrice 1024 par 1024 points par une phase aléatoire (i.e. des valeurs prises au hasard entre 0 et $2\pi$) et remplissage d'une matrice 1024 par 1024 par la répartition d'intensité du faisceau entrant (faisceau YAG sortant de la fibre multimode).

2) Transformation de Fourier complexe (FFT classique) directe.

3) L'information (matrice) de phase est conservée, l'information (matrice) d'amplitude est remplacée par la répartition d'amplitude désirée dans le champ lointain (ici, huit spots lumineux symétriques). 4) Transformation de Fourier complexe inverse.

5) L'information de phase est conservée et l'information d'amplitude est remplacée par la répartition d'amplitude sortant, de la fibre multimode.

Les étapes 2) à 5) sont répétées n fois (n=nombre d'itérations).

6) L'information de phase (matrice) est ramenée, par seuillage, à deux niveaux :

a) si la fonction de phase continue, obtenue par l'algorithme de Gerchbert-Saxton, a une valeur supérieure à $\frac{\pi}{2}$, la valeur 1 est attribuée à la phase,

b) Sinon (0 fonction de phase $\leq \frac{\pi}{2}$), la valeur 0 est attribuée à la phase.

Dans le processus de fabrication, 0 veut dire pas de gravure, et 1 veut dire gravure (à une profondeur de $\lambda/(2(n-1))$. ($\lambda$ : longueur d'onde, n : indice de réfraction du substrat).

7) Cette information de phase est ensuite formatée sous le format GDSII.

8) Le fichier est soumis au laboratoire de fabrication microlithographique.

9) L'élément est répliqué en x et y pour aboutir à une pupille totale circulaire de 2 cm de diamètre.

Le dispositif de focalisation selon l'invention peut être utilisé en combinaison avec des moyens pour produire un faisceau laser. En particulier, il est adapté au faisceau impulsionnel, de grande intensité, produit par des lasers tels que par exemple les lasers Nd:YAG, ou à iode-oxygène. Les rayonnements produits par ces sources lasers présentent l'avantage d'être transmissible par fibre optique et, par conséquent, il est possible de disposer le dispositif de focalisation selon l'invention en sortie de fibre optique, cette dernière transmettant le faisceau produit par le rayonnement laser. Dans tous les cas, le point focal peut être aisément modifié en déplaçant par translation un des éléments du dispositif de focalisation par rapport à l'autre. Les moyens à mettre ainsi en oeuvre sont peu encombrants.

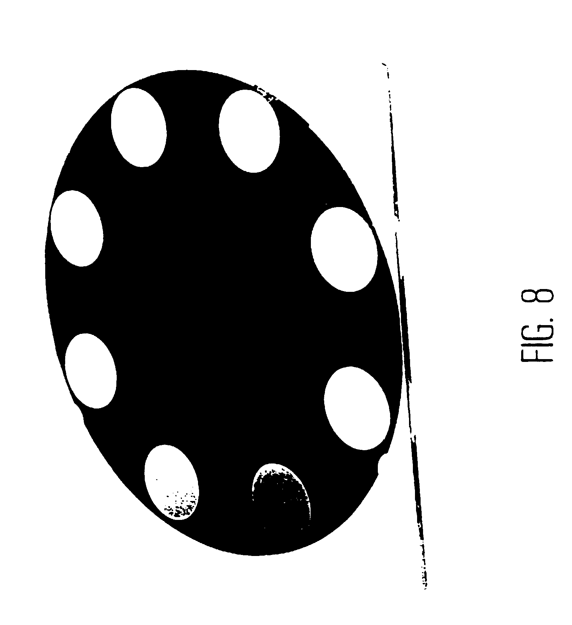

La figure 8 est un cliché d'un élément de E'resnel mis en oeuvre dans le cadre de l'invention. 8 pupilles de Fresnel y apparaissent clairement, chacune ayant un diamètre de 20 mm. Elles sont réparties sur un disque de diamètre 127 mm (5 pouces), le centre géomoétrique de chacune étant situé à 50 mm du centre du disque.

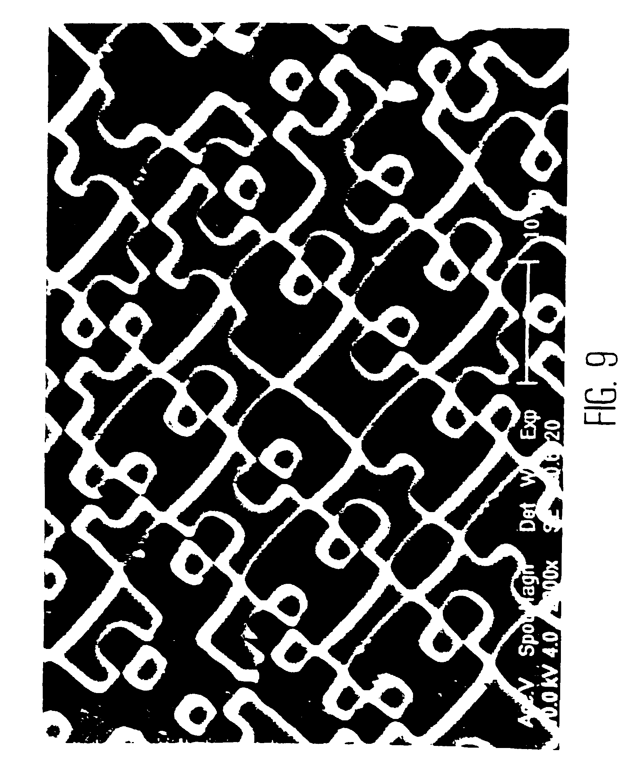

La figure 9 est un cliché d'une portion d'un élément de Fourier mis en oeuvre dans le cadre de l'invention. Le cliché est réalisé au microscope électronique, 3 cm représentant 10 $\mu$m.

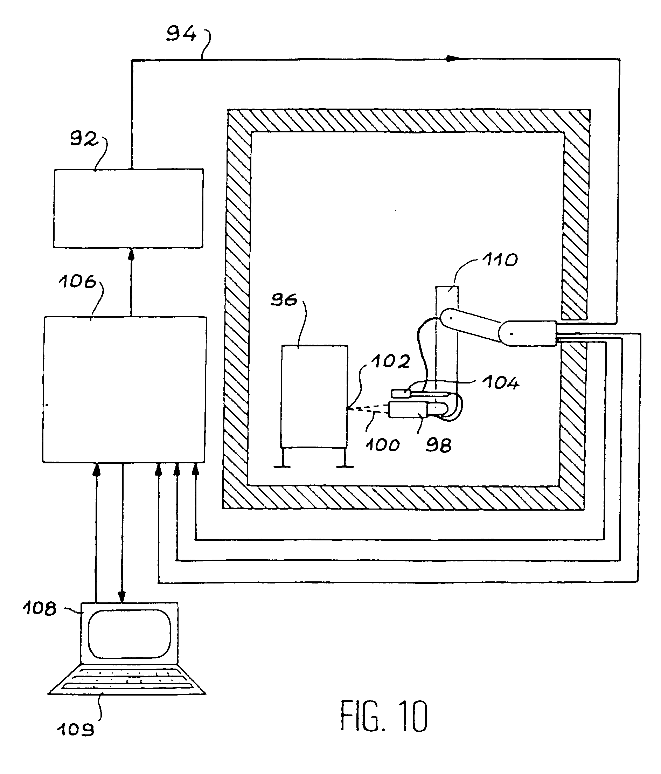

Une mise en oeuvre de l'invention, dans le cadre d'un dispositif de découpage ou de démantèlement, va maintenant être décrite en liaison avec la figure 10. La référence 92 désigne une source laser, par exemple une source Nd:YAG de puissance, utilisable en mode impulsionnel, et dont les impulsions peuvent être paramétrées en fréquence, en énergie et en durée. Une fibre optique 94 permet un transport du rayonnement issu de la source impulsionnelle laser en direction d'une pièce à découper 96, située à distance. Dans le cas d'opérations de démantèlement, une telle distance peut atteindre une dizaine de mètres. Le faisceau 100 est ensuite projeté en direction de la pièce 96, l'extrémité de la fibre optique pouvant être maintenue par exemple dans une tête de découpe 98. Un dispositif optique de focalisation tel que décrit ci-dessus (et non représenté sur la figure 10), permet la focalisation du faisceau laser 100 au niveau d'une zone d'impact 102, à proximité de la surface de la pièce à découper. Ce dispositif de focalisation, à distance focale fixe ou variable, peut être incorporé dans la tête de découpe 98. Par ailleurs, des moyens 104, comportant par exemple une caméra et/ou un télémètre et/ou un profilomètre, peuvent être prévus à proximité de la tête 98, ou de l'extrémité de la fibre optique 94, afin de permettre une évaluation de la distance à la surface ce la pièce.

Les données transmises à partir des moyens 104 peuvent être analysées dans un dispositif de commande 106 prévu à cet effet. Un dispositif de commande des impulsions (fréquence, durée, énergie, ...) de la source laser 92 pouvant être prévu, il peut par exemple être intégré dans le dispositif de commande 106. Ce dispositif peut comporter par exemple un micro-ordinateur ou microprocesseur conventionnel convenablement programmé pour l'analyse des données. Les instructions de programme appropriées peuvent être enregistrées sur disque magnétique ou sur des unités conventionnelles de type RAM ou ROM. Par ailleurs, peuvent être également prévus des moyens 108 d'affichage des données analysées ou de l'image visualisée à l'aide de la caméra, un opérateur pouvant éventuellement introduire des données de pilotage ou de commande à l'aide d'un clavier 109, ou poste de commande. L'opérateur peut ainsi prendre une décision quant à la nécessité de déplacer l'extrémité de la fibre optique, et/ou le dispositif de focalisation et/ou la distance focale, par rapport à la surface de la pièce 96.

Des moyens de contrôle de la position de l'extrémité de la fibre et/ou des moyens de contrôle de la focalisation du faisceau peuvent également être prévus ; en particulier, il peut être prévu un déplacement automatique de la tête de découpe et/ou du dispositif de focalisation lorsqu'une certaine distance, par exemple entre la tête de découpe et la surface de la pièce 96 à découper, a été mesurée et lorsqu'il est établi par des moyens de comparaison, ou lorsque l'opérateur constate, que cette distance mesurée ou évaluée s'écarte, d'une trop grande marge, d'une certaine distance prédéterminée, enregistrée au préalable, par exemple dans les moyens de mémorisation mentionnés ci-dessus.

Par ailleurs, il est souvent préférable de déplacer la tête de découpe par rapport à la pièce, plutôt que l'inverse, afin de réaliser un sillon de découpe. En effet, la pièce est souvent volumineuse, il peut s'agir par exemple d'une partie d'une installation nucléaire. Dans ce cas, des moyens de déplacement de la tête de découpe le long d'une trajectoire pouvant être contrôlée par l'opérateur peuvent être prévus. Ainsi, dans l'exemple représenté sur la figure 10, une tête de découpe 98 incorpore l'extrémité de la fibre, et cette tête de découpe est déplacée par rapport à la pièce à l'aide d'un bras robotisé 110 permettant divers déplacements dans l'espace (translation, pivotement par rapport à certains axes). Le contrôle d'un bras robotisé 110, à distance, peut être réalisé à l'aide de la console de commande 106 et des moyens de commande interactifs 108, 109. Dans ce type de commande, il peut en outre être intéressant de pouvoir faire varier la vitesse de déplacement de la tête par rapport à la pièce à découper.

Dans le cas d'une focale fixe, le bras téléopéré 110 peut être implanté dans une cellule à démanteler. Les tolérances liées à la grande focale f du dispositif de focalisation lui permettent de découper l'environnement à $f \pm \Delta f$, $\Delta f$ dépendant de la focale et des caractéristiques des matériaux à découper.

L'identification des cibles et leur suivi peuvent être faits automatiquement par des dispositifs ce saisie et analyse de forme par ordinateur, ou de façon semi-automatique en incluant un opérateur dans la boucle, en utilisant les ressources des dispositifs de téléprésence, grâce notamment aux méthodes développées pour la téléopération assistée par ordinateur. Ces méthodes peuvent être implémentées dans le micro-ordinateur du dispositif de commande 106.

L'exploitation d'un "zoom" opérant par déplacement d'un des éléments diffractifs de façon coaxiale par rapport à l'autre permet d'atteindre une zone de travail importante pouvant varier de 0 m à 10 m. Au-delà, il faut tenir compte des perturbations du faisceau liées au trajet optique dans l'air.

L'utilisation du "zoom", dont l'asservissement de la longueur focale peut être piloté à partir de la mesure du profil de la pièce à découper, permet non seulement de tirer à des distances variables, mais aussi de soulager le bras téléopéré î10 de la fonction "maintien à une distance constante" de la pièce à découper.

L'ensemble constitue une instrumentation homogène, efficace, car compacte, moins sensible que toutes les autres technologies connues aux perturbations environnementale (vibrations, chocs, poussières, etc...), y compris les rayonnements ionisants : l'ensemble est donc véritablement adapté à une exploitation de chantier, par exemple sur des sites de démantèlement de centrale nucléaire. Le système de focalisation en optique diffractive numérique, très léger (de l'ordre de 250 g), peut être remplacé facilement sous forme de module ; grâce aux spécificités du montage, aucun positionnement et réalignement optique n'est à traiter. Les opérations de maintenance du dispositif de découpage peuvent être simplifiées, les parties usées pouvant être remplacées facilement par échange standard de module : par exemple lampe flash pour le pompage du laser ou fibre optique à remplacer chaque 5000 heures d'utilisation par échange standard. Les fibres démontées, si elles ne sont pas trop irradiées, peuvent être repolies aux extrémités pour être remontées pour un autre cycle de 5000 heures, et ceci 2 à 3 fois.

**Revendications**

1. Dispositif optique de focalisation d'un faisceau lumineux, comportant :

   - une lentille diffractive de Fourier (2, 14), qui permet de séparer un faisceau (6), incident suivant un axe (AA', BB') en n faisceaux (10-1, 10-2, 10-3, 10-4, 10-5, 18, 20), suivant n directions symétriques par rotation par rapport à l'axe optique (AA', BB') défini par le faisceau incident,
   - un élément diffractif (4) comportant n lentilles de Fresnel (4-1, 4-2, ...., 4-8, 22), permettant de refocaliser les n faisceaux sur l'axe optique, chaque lentille de Fresnel étant associée à un des n faisceaux.

2. Dispositif optique de focalisation selon la revendication 1, la lentille de Fourier (14) et l'élément diffractif (22) étant construits et disposés de manière à ce qu'un faisceau incident soit réfléchi par la lentille de Fourier (14) et décomposé en n faisceaux (18, 20), chacun de ces faisceaux étant ensuite réfléchi par une des lentilles de Fresnel (22) vers un point de focalisation (F').

3. Dispositif optique de focalisation selon la revendication 1, la lentille de Fourier (2) et l'élément diffractif (4) étant construits et disposés de manière à ce que le dispositif fonctionne en transmission.

4. Dispositif optique de focalisation selon l'une des revendications 1 à 3, comportant en outre des moyens (12) de collimation du faisceau lumineux incident.

5. Dispositif optique selon la revendication 4, les moyens de collimation comportant un élément réfractif (12).

6. Dispositif optique selon l'une des revendications 1 à 5, comportant en outre des moyens pour réaliser un déplacement relatif de la lentille de Fourier par rapport aux éléments de Fresnel.

7. Dispositif pour engendrer un rayonnement laser focalisé, comportant :

   - des moyens (92) pour engendrer un faisceau laser (94, 100),
   - un dispositif optique de focalisation selon l'une des revendications 1 à 6.

8. Dispositif pour engendrer un rayonnement laser focalisé, selon la revendication 7, le faisceau laser étant transmis par fibre optique depuis les moyens (92) pour l'engendrer, vers le dispositif optique de focalisation.

9. Dispositif pour la découpe laser, comportant un dispositif pour engendrer un rayonnement laser focalisé selon l'une des revendications 7 ou 8.

10. Dispositif pour la découpe laser, selon la revendication 9, comportant en outre des moyens pour déclencher, de manière impulsionnelle et relaxée, les moyens (92) d'émission du faisceau laser.

11. Dispositif selon la revendication 8 et selon l'une des revendications 9 ou 10, l'extrémité de la fibre optique, destinée à être orientée vers une pièce à découper, faisant partie d'une tête de découpe.

12. Dispositif selon la revendication 8 et selon l'une des revendications 9 à 11, comportant en outre des moyens permettant d'évaluer la distance entre l'extrémité de la fibre optique et une pièce à découper.

13. Dispositif selon la revendication 8 et selon l'une des revendications 9 à 12, comportant en outre des moyens de contrôle de la position de l'extrémité de la fibre et/ou des moyens de contrôle de la focalisation du faisceau.

**Patentansprüche**

1. Optische Fokussiervorrichtung eines Lichtstrahls, umfassend:

   - eine diffraktive Fourier-Linse (2, 14), um einen entsprechend einer Achse (AA', BB') einfallenden Lichtstrahl (6) in n Strahlen (10-1, 10-2, 10-3, 10-4, 10-5, 18, 20) mit rotationssymmetrischen Richtungen zu teilen, bezogen auf die durch den einfallenden Strahl definierte optische Achse (AA', BB'),
   - ein diffraktives Element (4) mit n Fresnel-Linsen (4-1, 4-2, ..., 4-8, 22), um die n Strahlen wieder auf die optische Achse zu fokussieren, wobei jede Fresnel-Linse einem der n Strahlen zugeordnet ist.

2. Optische Fokussiervorrichtung nach Anspruch 1, wobei die Fourier-Linse (14) und das diffraktive Element (22) so konstruiert und angeordnet sind, daß ein einfallender Strahl durch die Fourier-Linse (14) reflektiert und in n Strahlen (18, 20) zerlegt wird, wobei jeder dieser Strahlen anschließend durch eine der Fresnel-Linsen (22) auf einen Fokussierpunkt (F') reflektiert wird.

3. Optische Fokussiervorrichtung nach Anspruch 1, wobei die Fourier-Linse (2) und das diffraktive Element (4) so konstruiert und angeordnet sind, daß die Vorrichtung mittels Transmission funktioniert.

4. Optische Fokussiervorrichtung nach einem der Ansprüche 1 bis 3, die außerdem Kollimationseinrichtungen (12) des einfallenden Lichtstrahls umfasst.

5. Optische Fokussiervorrichtung nach Anspruch 4, wobei die Kollimationseinrichtungen ein refraktives Element (12) umfassen.

6. Optische Fokussiervorrichtung nach einem der Ansprüche 1 bis 5, die außerdem Einrichtungen umfassen, um eine Relativverschiebung der Fourier-Linse in Bezug auf die Fresnel-Elemente durchzuführen.

7. Vorrichtung zum Erzeugen einer fokussieren Laserstrahlung, umfassend:

   - Einrichtungen (92) zum Erzeugen eines Laserstrahls (94, 100),
   - eine optische Fokussiervorrichtung nach einem der Ansprüche 1 bis 6.

8. Vorrichtung zum Erzeugen einer fokussierten Laserstrahlung nach Anspruch 7, wobei der Laserstrahl von seinen Erzeugungseinrichtungen (92) bis zu der optischen Fokussiervorrichtung durch eine optische Faser übertragen wird.

9. Laserschneidvorrichtung mit einer Vorrichtung zum Erzeugen einer fokussierten Laserstrahlung nach einem der Ansprüche 7 oder 8.

10. Laserschneidvorrichtung nach Anspruch 9, die außerdem Einrichtungen umfaßt, um die Laserstrahl-Emissionseinrichtungen (92) gepulst und relaxiert anzuregen.

11. Vorrichtung nach Anspruch 8 und einem der Ansprüche 9 oder 10, wobei das Ende der optischen Faser, das dazu bestimmt ist, auf ein zu schneidendes Stück ausgerichtet zu werden, Teil eines Schneidkopfs ist.

12. Vorrichtung nach Anspruch 8 und einem der Ansprüche 9 bis 11, die außerdem Einrichtungen umfasst, die ermöglichen, den Abstand zwischen dem Ende der optischen Faser und dem zu schneidenden Stück zu bewerten.

13. Vorrichtung nach Anspruch 8 und einem der Ansprüche 9 bis 12, die außerdem Kontrolleinrichtungen der Position der Faser und/oder Kontrolleinrichtungen der Fokussierung des Strahls umfassen.

**Claims**

1. Optical device for focussing a light beam, comprising:

   - a Fourier diffractive lens (2, 14), which makes it possible to split an incident beam (6) along an axis (AA', BB') into n beams (10-1, 10-2, 10-3, 10-4, 10-5, 18, 20), in n rotation-symmetrical directions with respect to the optical axis (AA', BB') defined by the incident beam,
   - a diffractive element (4) incorporating n Fresnel lenses (4-1, 4-2, ..., 4-8, 22) making it possible to refocus the n beams on the optical axis, each Fresnel lens being associated with one of the n beams.

2. Optical focussing device according to claim 1, the Fourier lens (14) and the diffractive element (22) being constructed and arranged in such a way that an incident beam is reflected by the Fourier lens (14) and broken down into n beams (18, 20), each of said beams then being reflected by one of the Fresnel lenses (22) to a focussing point (F').

3. Optical focussing device according to claim 1, characterized in that the Fourier lens (2) and the diffractive element (4) are constructed and arranged in such a way that the device functions in transmission.

4. Optical focussing device according to one of the claims 1 to 3, also incorporating means (12) for collimating the incident light beam.

5. Optical device according to claim 4, the collimating means incorporating a refractive element (12).

6. Optical device according to one of the claims 1 to 5, also incorporating means for bringing about a relative displacement of the Fourier lens with respect to the Fresnel elements.

7. Device for producing focussed laser radiation, comprising means (92) for producing a laser beam (94, 100), an optical focussing device according to one of the claims 1 to 6.

8. Device for producing focussed laser radiation according to claim 7, the laser beam being transmitted by optical fibre from the means (92) for producing it to the optical focussing device.

9. Device for laser cutting, comprising a device for producing focussed laser radiation according to one of the claims 7 or 8.

10. Device for laser cutting according to claim 9, also comprising means for triggering, in a pulsed and relaxed manner, the laser beam emission means (92).

11. Device according to claim 8 and according to one of the claims 9 or 10, the optical fibre end to be oriented towards a part to be cut, forming part of a cutting head.

12. Device according to claim 8 and according to one of the claims 9 to 11, also comprising means permitting an evaluation of the distance between the optical fibre end and the part to be cut.

13. Device according to claim 8 and according to one of the claims 9 to 12, also comprising means for checking the position of the end of the fibre and/or means for checking the focussing of the beam.

FIG. 1 A

FIG. 1B

FIG. 2

FIG. 3

13

FIG. 4

FIG. 5 A

FIG. 5 B

FIG. 5 C

FIG. 6 A

FIG. 6 B

FIG. 6 C

FIG. 6 D

FIG. 7A

FIG. 7B

FIG. 7C

FIG. 7D

FIG. 8

FIG. 9

FIG. 10